# EUROPEAN PATENT APPLICATION

(11) **EP 1 306 208 A1**
(43) Date of publication of application: **02.05.2003**
(21) Application number: 01947896.5
(22) Date of filing: 06.07.2001
(51) Int. Cl.: B32B 25/08

(54) **RESIN LAMINATE, LEATHER-LIKE SHEET, AUTOMOTIVE INTERIOR MATERIAL, AND PROCESS FOR PRODUCING RESIN LAMINATE**

(30) Priority: 10.07.2000 JP 2000208657; 10.07.2000 JP 2000208658; 10.07.2000 JP 2000208659; 06.10.2000 JP 2000308106; 06.11.2000 JP 2000338140; 28.11.2000 JP 2000361190
(71) Applicant: Idemitsu Technofine Co. Ltd, Sumida-ku, Tokyo 130-0015 (JP)
(72) Inventor: SHIMADA, Hidetoshi, Sodegaura-shi, Chiba 299-0205 (JP); SUZUKI, Tomomasa, Sumida-ku, Tokyo 130-0015 (JP)
(74) Representative: Jones, Helen Marjorie Meredith
(86) International application number: JP0105897
(87) International publication number: WO02004204

(57) **Abstract**

A resin laminate 1 comprising a thermoplastic polyolefin elastomer (TPO) layer 10, a primer layer 30 superposed on the TPO layer 10, and a polyurethane layer 20 superposed on the primer layer, wherein the primer layer is made from a thermoplastic polyolefin elastomer containing an adhesion improver, and the adhesion improver comprises a compound having a functional group containing active hydrogen and/or a compound having an inorganic nature/organic nature ratio of 0.5 or higher.

## Description

### Technical Field

The present invention relates to a resin laminate, leather-like sheet, automotive interior material and process for producing the resin laminate.

### Background Art

Recently, leather-like resin sheets have been widely used as a material of automotive interiors and furniture. The material of such leather-like resin sheets generally includes vinyl chloride resins and urethane resins which have a comparatively high surface strength, and a high adhesiveness with a paint, a coating material or an adhesive agent.

However, vinyl chloride resins evolve toxic gases such as chlorine-containing gases when incinerated, which may have a hazardous effect on the environment. On the other hand, urethane resins are expensive.

As a solution to these problems, leather-like resin sheets which are mainly made from thermoplastic polyolefin elastomers (TPO) have been developed.

However, TPO does not have a sufficiently high surface strength to be used as a material of a leather-like sheet.

As a solution to this problem, a leather-like TPO sheet which comprises a urethane layer superposed on a TPO layer was developed, and currently this material is used mainly for the manufacture of furniture.

However, this leather-like TPO sheet, because adhesion of the polyurethane layer to the TPO layer being weak, does not have a sufficiently high surface strength (or wear resistance) as initially expected as compared with a corresponding TPO sheet. Therefore, this material is not yet used in the applications requiring high surface strength.

The process responsible for the production of TPO has been variously modified to improve the affinity of TPO to pigments, coating materials, and adhesive agents. The currently known best process for the purpose is as follows.
(1) A first process consists of applying a polymerization initiator which does not contain any hydroxyl group, and a pigment or a dye on a polyolefin substrate, to form a coat thereupon, and then of radiating ultraviolet rays onto the assembly (as disclosed in the Japanese Unexamined Patent Publication Nos. 7-62127 and 7-62128).
(2) A second process uses an organic silicon compound as a primer (as disclosed in the Japanese Examined Patent Publication No. 6-51849).

The first process includes the radiation of ultraviolet rays to initiate polymerization as a necessary step, which may complicate the process. Moreover, the general surface treatment such as corona treatment and plasma treatment can not be practiced in this process.

With regard to the second process using an organic silicon compound, because the organic silicon compound is susceptible to moisture, the interval between its formation and subsequent application of a paint, coating material or adhesive agent thereupon must be sufficiently brief, which requires the involved steps to proceed quickly.

The object of this invention is to provide a resin laminate which has a high surface strength and in which individual constituent layers are firmly adhered to each other, a leather-like sheet, an automotive interior material, and a method for producing such a resin laminate.

### Disclosure of the Invention

### (Adhesion Improver Added and Primer Layer Introduced)

The resin laminate of this invention comprises a thermoplastic polyolefin elastomer (TPO) layer, a primer layer superposed on the TPO layer, and a polyurethane layer superposed on the primer layer, wherein the primer layer is made of a thermoplastic elastomer containing an adhesion improver and the adhesion improver comprises a compound having a functional group containing active hydrogen and/or a compound having an inorganic nature/organic nature ratio of 0.5 or higher.

The active hydrogen containing functional group of the resin laminate of this invention is preferably an amino group. The compound of the resin laminate of this invention which has an inorganic nature/organic nature ratio of 0.5 or higher preferably acts as a heat stabilizing agent and/or a light stabilizing agent.

The primer layer of the resin laminate of this invention preferably contains the adhesion improver at a concentration of 0.001 to 50 wt%.

According to this invention, the primer layer comprises an adhesion improver composed of a compound having a functional group containing active hydrogen and/or a compound having an inorganic nature/organic nature ratio of 0.5 or higher. Insertion of such a primer layer enhances the adhesion of the polyurethane layer to the TPO layer.

The functional group such as a polar group or amino group present in the adhesion improver enhances the adhesion (affinity) of the primer layer to the polyurethane layer which leads to the enhanced adhesion of the polyurethane layer to the TPO layer. This in turn results in the enhanced surface strength of the resin laminate body.

If a reactive urethane primer is used as a constituent of the polyurethane layer, not only adhesion of the primer layer to the TPO layer will be enhanced, but also adhesion of the reactive urethane layer to the primer layer will be enhanced. Thus, the individual layers constituting the resin laminate will be more firmly bonded to each other.

In addition, because the resin laminate of this invention is mainly composed of polyolefin compounds, it will not evolve toxic gases such as chlorine-containing gases even when incinerated, and thus is more compatible with the environment than other resin laminates made from chlorine-containing resins.

### (Adhesion Improver Added and No Primer Layer Introduced)

The resin laminate of this invention comprises a TPO layer and a polyurethane layer superposed on the TPO layer, wherein an adhesion improver is used as a constituent of the TPO layer, and the adhesion improver is a compound having a functional group containing active hydrogen and/or a compound having an inorganic nature/organic nature ratio of 0.5 or higher.

The active hydrogen containing functional group of the resin laminate of this invention is preferably an amino group.

If the adhesion improver is a compound having a functional group containing active hydrogen, the TPO layer preferably contains the adhesion improver at a concentration of 0.001 to 50 wt%.

According to the resin laminate of this invention, preferably the adhesion improver also acts as a heat stabilizing agent and/or a light stabilizing agent.

If the adhesion improver is a compound having an inorganic nature/organic nature ratio of 0.5 or higher, the TPO layer preferably contains the adhesion improver at a concentration of 0.01 wt% or higher.

According to this invention, because the TPO layer contains an adhesion improver having a functional group containing active hydrogen, and/or, an adhesion improver having an inorganic nature/organic nature ratio of 0.5 or higher, adhesion of the polyurethane layer to the TPO layer will be enhanced.

More specifically, a functional group containing active hydrogen such as amino group, or a polar group such as amino group, amine-like nitrogen atom, hydroxyl group, ester group, carbonyl group, carboxyl group, etc. contained in the adhesion improver improves the adhesion (affinity) of the polyurethane layer to the TPO layer, and thus the polyurethane layer becomes firmly bonded to the TPO layer. Because of this, the resin laminate will have an enhanced surface strength.

If the surface of the TPO layer is subjected to corona treatment, and a reactive urethane primer is used as a constituent of the polyurethane layer, not only adhesion of the reactive urethane primer to the TPO layer is enhanced, but adhesion of the reactive urethane primer to the thermoplastic polyurethane layer is also enhanced. Thus, adhesion of individual layers constituting the laminate will be further enhanced.

In addition, because the resin laminate of this invention is mainly composed of polyolefin compounds, it will not evolve toxic gases such as chlorine-containing gases even when incinerated, and thus is more compatible with the environment than other resin laminates made from chlorine-containing resins.

### (Organic Pigment Added and Primer Layer Introduced)

The resin laminate of this invention comprises a TPO layer a primer layer superposed on the TPO layer, and a polyurethane layer superposed on the primer layer, wherein the primer layer comprises an organic pigment and a TPO.

The primer layer of the resin laminate of this invention preferably contains an organic pigment at a concentration of 0.5 to 50 wt%.

According to this invention, because the primer layer contains a TPO, affinity of the primer layer to the TPO layer is enhanced, and thus adhesion of the former to the latter is strengthened.

In addition, because the primer layer contains an organic pigment, adhesion of the primer layer to the overlying polyurethane layer is also enhanced. Therefore, adhesion of individual layers constituting the laminate will be enhanced. The enhanced adhesion of the primer layer to the polyurethane layer is ascribed to the improved affinity of the former to the latter which may be brought about by the reactive group such as an amino group, hydroxyl group existent in the organic pigment.

Moreover, if a reactive urethane primer is used as a constituent of the polyurethane layer, not only adhesion of the reactive urethane primer to the primer layer is enhanced, but adhesion of the reactive urethane primer to thermoplastic polyurethane will be also enhanced. Therefore, adhesion of individual layers constituting the laminate will be enhanced.

In addition, because the resin laminate of this invention is mainly composed of polyolefin compounds, it will not evolve toxic gases such as chlorine-containing gases even when incinerated, and thus is more compatible with the environment than other resin laminates made from chlorine-containing resins.

### (Organic Pigment Added and No Primer Layer Introduced)

The resin laminate of this invention comprises a TPO layer, and a polyurethane layer superposed on the TPO layer wherein the TPO layer contains an organic pigment so that the TPO layer is firmly bonded to the polyurethane layer.

According to the resin laminate of this invention, the TPO layer preferably contains an organic pigment at a concentration of 0.5 to 50 wt%

"Being firmly bonded to" as used herein means that the TPO layer is so firmly bonded to the polyurethane layer that, if an attempt were made to forcibly separate the former from the latter, the former would not be separated from the latter, but the attempt would result in the breakage of the laminate itself.

According to the present invention, because the TPO layer contains an organic pigment, adhesion of the TPO layer to the polyurethane layer will be enhanced. Specifically, adhesion (affinity) of the TPO layer to the polyurethane layer will be enhanced owing to a reactive group such as amino group, hydroxyl group, etc., existent in the organic pigment, which may account for the firm boding of the TPO layer to the polyurethane layer. Thus, the resulting laminate body will have an enhanced surface strength.

If a reactive urethane primer is used as a constituent of the polyurethane layer, not only adhesion of the reactive urethane primer to the TPO layer is enhanced, but adhesion of the reactive urethane primer to thermoplastic polyurethane is also enhanced. Thus, adhesion of individual layers constituting the laminate will be further enhanced.

In addition, because the resin laminate of this invention is mainly composed of polyolefin compounds, it will not evolve toxic gases such as chlorine-containing gases even when incinerated, and thus is more compatible with the environment than other resin laminates made from chlorine-containing resins.

### (Resin Laminate)

With the resin laminate of this invention, the polyurethane layer preferably comprises a reactive urethane primer layer and a thermoplastic polyurethane layer.

Such a resin laminate can be obtained by extending a TPO material supplemented with an adhesion improver or an organic pigment via calendering or T-die molding into a sheet, and superposing a polyurethane layer over the TPO sheet (layer). The superposition of a polyurethane layer over the TPO layer can be achieved by various methods: this is achieved by directly coating the former over the latter using, for example, gravure rolls, comma coater, doctor knife coater, over-roll coater, etc., or by using an indirect offset method in which a polyurethane film (polyurethane layer) is formed on a sheet of separable paper, and the polyurethane film is then transferred onto the TPO layer.

The material used for the production of the resin laminate may include followings, and production of the resin laminate may be achieved by the method of this invention as will be described below.

### (Thermoplastic Polyolefin Elastomer)

The thermoplastic polyolefin elastomer (TPO) used for the formation of the TPO layer or the primer layer in this invention may include (1) elastomers containing polypropylene as a hard component and polyethylene as a soft component, (2) elastomers containing ethylene and a small amount of a diene compound, (3) ethylene-propylene-diene rubber (EPDM), (4) ethylene-propylene rubber (EPR), (5) butyl rubber grafted polyethylene, (6) styrene elastomers, (7) blends of the above elastomers (rubbers) (1) to (6), (8) elastomers obtained by adding an organic peroxide to any one of the elastomers (1) to (7) for partial cross-linking, and (9) elastomers obtained by graft-copolymerizing unsaturated hydroxy monomers and unsaturated carboxylic derivatives. The TPO may include foamed bodies.

### (Polyurethane)

The polyurethane layer preferably comprises a reactive polyurethane primer layer and a thermoplastic polyurethane layer.

The reactive polyurethane primer is made from a polyisocyanate and polyhydroxyl compounds which, when mixed, react with each other to form a polyurethane polymer. More specifically, the two compounds are dissolved in separate solvents; the two solutions are mixed; the resulting mixture is spread via gravure rolls to form a sheet; and the sheet made from a polyurethane polymer is dried.

The polyisocyanate compound includes monocyclic, aromatic heterocyclic, aliphatic, di, tri and tetra-alicyclic polyisocyanate compounds.

The polyhydroxyl compound includes polyesterpoly(di to poly)ol, polyetherpoly(di to poly)ol, etc.

Polyurethane used for the formation of the thermoplastic polyurethane layer is obtained by polymerizing polycarbonatepolyol, polyesterdiol or polyoxyalkyleneetherdiol and polyisocyanate in the presence of a chain elongating agent, and can be prepared from a mixture of those compounds dissolved in a solvent.

The polycarbonatepolyol includes polyalkylenepolycarbonatepolyol, and polyalkylenepolycarbonatepolyol which is degenerated so much that polyalkylenepolycarbonate is partly substituted for polyoxyalkylenecarbonate.

The polyesterdiol may include, for example, adipate, caprolacton derivatives and carbonate having a diol component. The polyoxyalkyleneetherdiol may include, for example, polytetramethyleneglycol, polypropyleneglycol, polyethylene-propyleneglycol, polypropylene-ethyleneglycol, etc.

The chain elongation agent may include alkyldiols such as 1,4-butanediol, 1,6-hexanediol, etc., and primary and secondary aliphatic diamines.

The solvent may include various solvents to which polyurethane elastomers are soluble, such as N,N-dimethylformamide (DMF), methylethylketone (MEK), ethylacetate, etc.

The polyurethane used for the formation of the polyurethane layer may include acryl-urethane resins. The acryl-urethane resin is obtained by dissolving a polymer derived from acrylpolyol and polyisocyanate in a solvent.

The polyurethane layer preferably has a thickness of 1 to 300 µm, a rubber hardness of 50° or more in JIS-A measurement, and/or, an elasticity of 1 MPa or more in terms of 100% modulus. More preferably, the polyurethane layer has a thickness of 3 to 100 µm, a rubber hardness of 55 to 100°, and/or an elasticity of 2 to 30 MPa or more.

The polyurethane layer may be made from a polyurethane elastomer. The polyurethane layer may have a laminated structure as needed. For example, sub-layers constituting the polyurethane layer may be arranged appropriately according to given purposes: in some applications the most superficial sub-layer is made from a material which will give a good touch feeling, and the most basic layer is made from a strong material; and in other applications, the arrangement of those sub-layers may be reversed.

Fine powder of a natural organic compound may be added to the polyurethane layer. The natural organic compound may include silk, cellulose, collagen, wool, keratin, hemp, cotton, chitin, chitosan, betaine, egg-shell, etc., and combinations thereof.

The addition amount of the natural organic compound is usually 1 to 90 wt.%, preferably 3 to 60 wt.%, and most preferably 5 to 30 wt.%. If the addition amount in question were over 90 wt.%, the elasticity of the resin would be impaired. The powder of a natural organic compound has an average particle diameter of 300 µm or less, preferably 1 to 100 µm, more preferably 3 to 30µm, when measured with a particle size meter (LMS-24, Seishin Co.) which determines the particle size distribution of a test powder using laser diffraction and scattering. If the particle size in question were over 300 µm, the polyurethane layer might not give a good touch feeling.

### (Adhesion Improver)

The adhesion improver of this invention may include compounds having a functional group containing active hydrogen or compounds having an inorganic nature/organic nature ratio of 0.5 or higher, or their combinations.

The addition amount of the adhesion improver is preferably 0.001 to 50 wt.%. If the addition amount in question were below 0.001 wt.%, the primer layer would not have a sufficiently high bonding activity. If the addition amount in question were over 50 wt.%, the primer layer would have its bonding activity impaired. More preferably, the addition amount in question is 0.01 to 40 wt.%, and most preferably 0.1 to 30 wt.%.

If the adhesion improver comprises a combination of a compound having a functional group containing active hydrogen and a compound having an inorganic nature/organic nature ratio of 0.5 or higher, its addition amount should be determined based on the summed weight percents of the two compounds.

### (Compound Having Functional Group Containing Active Hydrogen)

The functional group containing active hydrogen may include any functional group, provided that it contains active hydrogen. Aliphatic, alicyclic or aromatic amine compounds having a functional group with active hydrogen containing at least one amino group may be used. Of them, those containing an amino group is most preferred.

The number of amino groups contained in the compound is not limited to any specific one. Therefore, any aliphatic, alicyclic or aromatic amine compound containing at least an amino group may be used.

The amine compound may include straight chain aliphatic polyamines such as ethylene diamine, diethylene triamine, triethylene tetramine, tetraethylene pentamine, polyoxypropylene diamine, polyoxypropylene triamine, etc.; aliphatic amines such as cyclic aliphatic polyamine; alicyclic amines such as menthane diamine, isophorone diamine, bis(4-amino-3-methyldicyclohexyl)methane, diaminodicyclohexylmethane, bis(aminomethyl)cyclohexane, N-aminoethylpiperazine, 3,9-bis(3-aminopropyl) 2,4,8,10-tetraoxaspiro(5,5)undecane, m-xylenediamine, etc.; aliphatic aromatic amines such as α-(m/p-aminophenyl)ethylamine, etc.; aromatic diamines such as m-phenylene diamine, diaminodiphenylmethane, diaminodiphenylsulfone, diethyldimethyldiaminodiphenylmethane, etc.

The preferable amine compound may include those that are highly reactive to the NCO group of urethane, and have a low toxicity, volatility and odor.

### (Compounds Having an Inorganic Nature/Organic Nature Ratio of 0.5 or Higher)

The compound having an inorganic nature/organic nature ratio of 0.5 or higher may include those that have a polar group, for example, light stabilizers and heat stabilizers, and other aliphatic or aromatic organic compounds. Of them, light stabilizers and/or heat stabilizers are preferred.

The heat stabilizer may include hindered phenol antioxydants, phosphor-containing processing stabilizers, lacton-containing processing stabilizers, sulfur-containing processing stabilizers, etc.

The light stabilizer may include benzotriazol-based ultraviolet ray absorbers, triazine-based ultraviolet ray absorbers, benzophenone-based ultraviolet ray absorbers, benzoate-based light stabilizers, hindered amine-based light stabilizers, etc.

If the inorganic nature/organic nature ratio in question were below 0.5, the resulting compound would have, because of its too low inorganic nature, a low adhesion (affinity) to the polyurethane layer which has an inorganic group. The inorganic nature/organic nature ratio is preferably 0.6 or higher.

### (Organic Pigment)

The organic pigment may include insoluble azo pigments, condensed azo pigments, phthalocyanine blue, staining lake, isoindolinone, quinacridone, diketopyrrolopyrrole, anthraquinone, dioxane violet, perinone/perylene, etc. The above pigment may be used neat or used after its particles having been dispersed in a carrier such as polyethylene, vinylbutylal, rosin ester, etc.

The content of the organic pigment in the TPO layer or in the primer layer is at a level appropriate for coloring, that is, preferably 0.2 wt.% or more, more preferably 0.5 wt.% or more. The more the TPO layer or the primer layer contains the organic pigment, the more the adhesive activity of the layer is enhanced. However, if the layer contains the pigment too much, it will become brittle. Therefore, the content of the pigment should be adjusted to be adequate. More preferably, the content of the pigment is 0.5 to 50 wt.%.

To enhance dispersion of the organic pigment in a solvent, it is preferred to add a dispersant.

### (Corona Discharge Treatment)

The surface of the TPO layer or of the primer layer may be subjected to corona discharge treatment. Application of corona discharge to the surface of the TPO layer will enhance its adhesion or affinity to the polyurethane layer. The surface wet state of the primer layer or of the TPO layer after corona discharge treatment is not limited to any specific level, but is preferably improved by the treatment to a level of 350 µN/cm or higher in terms of surface wetting index (as defined in JIS K-6768 and determined by the method described there), or more preferably to 400 µN/cm or higher.

Before a primer is coated, it is customary to dissolve it in a solvent. The solvent may include aromatic hydrocarbons such as benzene, toluene, xylene, etc.; halogenated hydrocarbons such as trichloroethylene, tetrachloroethylene, methylchloroform, etc.; alicyclic hydrocarbons such as cyclohexane, methylcyclohexane, ethylcyclohexane, etc.; aliphatic hydrocarbons such as n-hexane, n-heptane, etc.; ketones such as acetone, methylethylketone, etc.; esters such as ethyl acetate, butyl acetate, etc.; ethers such as ethylether, diphenylether, etc.; and alcohols such as ethanol, isopropanol, etc.

### (Leather-Like Sheet)

The leather-like sheet of this invention comprises the resin laminate and a base material.

The base material is textile (base textile) woven mixedly from polyester and rayon threads, from rayon threads, from polypropylene threads, from polyester threads, or mixedly from polyester and rayon threads, or non-woven textile of a polypropylene foamed body, or of a polyurethane foamed body.

The weave of the base material may include unilateral plain knitting, bilateral plain knitting, special weave, twill weave, plain weave, Russell weave, plain stitch, etc.

Such a leather-like sheet can be obtained by applying an adhesive agent on the base material, and further applying the resin laminate over the assembly via T-die extrusion or calendering.

Because the leather-like sheet comprises the resin laminate superposed over the base material, it will be a TPO-based leather-like sheet having a high surface strength.

The leather-like sheet is suitably used as an automotive interior material because of its high surface strength.

The automotive interior material may be used for a leather-like sheet for the seat, door interior, inner panels, sun visor, ceiling, etc.

### (Production Method)

The method of this invention is related with the production of a resin laminate which comprises a thermoplastic polyolefin elastomer (TPO) layer and a polyurethane layer wherein the TPO layer containing an organic pigment is treated with a reactive urethane primer and the polyurethane layer is superposed on the thus treated layer.

According to the production method of this invention, the TPO layer preferably contains an organic pigment at a concentration of 0.5 to 50 wt%.

The TPO layer is preferably treated with a reactive urethane primer after having received corona discharge treatment.

The TPO layer preferably has a wetting index of 400 µN/cm or higher after corona discharge treatment.

The composition of the TPO layer, polyurethane layer, reactive urethane primer and organic pigment, and the procedures of corona discharge treatment were as described above, and thus their further explanation will be omitted.

According to the present invention, the TPO layer containing an organic pigment is treated with a reactive urethane primer, and then a polyurethane layer is superposed on the assembly. Therefore, adhesion of the TPO layer to the polyurethane layer is enhanced.

Specifically, adhesion of the TPO layer to the reactive urethane primer will be enhanced owing to a reactive group such as amino group, hydroxyl group, etc., existent in the organic pigment. Moreover, because the polyurethane layer is applied after the reactive urethane primer has been applied, adhesion of the polyurethane layer to the reactive urethane primer will be enhanced. Thus, the individual layers constituting the resin laminate will be firmly bonded to each other.

Because the polyurethane layer is superposed on the TPO layer, the resin laminate will have its surface strength (or wear resistance) enhanced.

Because the production process does not involve the use of any organic silicic compound which is susceptible to moisture, the interval between application of the urethane primer and subsequent superposition of the polyurethane layer thereupon may be more lengthened than in the case where the production process involves the use of an organic silicic compound, which will permit a more improved productivity.

In addition, because the resin laminate of this invention is mainly composed of polyolefin compounds, it will not evolve toxic gases such as chlorine-containing gases even when incinerated, and thus is more compatible with the environment than other resin laminates made from chlorine-containing resins.

According to the production method of this invention, the TPO layer preferably receives corona discharge treatment, and the TPO layer preferably has a wetting index of 400 µN/cm (expressed in SI system of units and is equivalent to 40 dyn/cm) or higher after the corona discharge treatment.

The wetting index described above is as defined in JIS K-6768 and is obtained by the method described there.

The TPO layer is oxidized as a result of corona discharge treatment, which will contribute to the enhanced bonding activity of the layer. If the corona discharge treatment is applied so as to elevate the wetting index of the TPO layer to 400 µN/cm or higher, the TPO layer will have a satisfactory bonding activity.

### Brief Description of Drawings

Fig. 1 is a partial sectional view of a resin laminate representing first and third embodiments of this invention.
Fig. 2 is a partial sectional view of a leather-like sheet representing second and fourth embodiments of this invention.
Fig. 3 is a partial sectional view of a resin laminate representing fifth, seventh and ninth embodiments of this invention.
Fig. 4 is a partial sectional view of a leather-like sheet representing sixth, eighth and tenth embodiments of this invention.

### Best mode for Carrying out the Invention

The preferred embodiments of the present invention will be described below with reference to the attached figures.

### [First Embodiment]

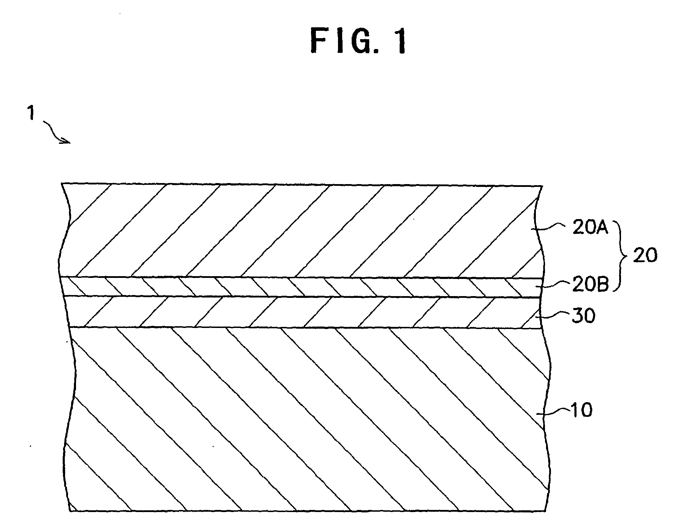

Fig. 1 shows a resin laminate 1 representing a first embodiment of this invention.

The resin laminate 1 comprises a thermoplastic polyolefin (TPO) layer 10, a primer layer superposed on the TPO layer 10 and a polyurethane layer 20 superposed on the primer layer 30.

The primer layer 30 is obtained by mixing an amine compound to serve as an adhesion improver which has a functional group containing active hydrogen or an amino group, TPO and toluene, and by applying the mixture on the surface of a TPO layer. The surface of the primer layer receives corona discharge treatment and should have a wetting index of 350 µN/cm or higher. The amine compound is contained in the primer layer at a concentration of 0.001 to 50 wt.%.

The polyurethane layer 20 comprises a sub-layer of a reactive urethane primer (urethane primer layer) 20B, and a sub-layer of a thermoplastic polyurethane 20A superposed on the urethane primer layer.

The resin laminate 1 configured as above is produced as follows.

Firstly, a TPO material is processed via calendering or T-die extrusion to produce a TPO sheet; a mixture comprising an amine compound, TPO and toluene is applied over the sheet; the assembly is dried to form a primer layer 30 on the TPO layer; and the surface of the assembly is subjected to corona discharge treatment.

Then, a reactive urethane primer is applied on the assembly via gravure rolls, and the assembly is dried to form a urethane primer layer 20B on the surface. A thermoplastic polyurethane layer 20A is applied via gravure rolls on the top of the assembly, to produce a resin laminate 1.

The embodiment as described above ensures following advantages.
(1) Because the primer layer 30 contains a TPO, the affinity of the primer layer 30 to the TPO layer 10 will be enhanced which will strengthen the bonding of the two layers.
(2) Because the primer layer 30 contains an amine compound at a concentration of 0.001 to 50 wt.%, adhesion of the primer layer 30 to the polyurethane layer 20 will be enhanced, which will strengthen the bonding of the layers constituting the resin laminate 1. Namely, an amino group of the amine compound will enhance the adhesion (affinity) of the primer layer to the polyurethane layer 20.
(3) Because an amino compound is contained in the primer layer, it is possible for the amino compound to achieve its function at a lower concentration than would be possible for the amino compound added to the TPO layer.
(4) Because the polyurethane layer 20 is introduced above the TPO layer 10, the resin laminate 1 has its surface strength enhanced, and is applicable to the structures which require their constituents to have a high surface strength.
(5) Because the polyurethane layer 20 comprises a sub-layer of a reactive urethane primer, it is possible to firmly bond the urethane primer layer 20B not only to the primer layer 30, but also to the thermoplastic polyurethane layer 20A. This further enhances the bonding of individual layers of the resin laminate 1.
(6) Because the primer layer 30 receives corona discharge treatment so that its surface has a wetting index of 350 µN/cm or higher, adhesion of the primer layer 30 to the polyurethane layer 20 is further enhanced.
(7) Because the resin laminate body 1 is mainly composed of polyolefin compounds, it will not evolve toxic gases such as chlorine-containing gases even when incinerated, and thus is compatible with the environment.
(8) Because the production process does not involve the use of any organic silicic compound which is susceptible to moisture, the interval between application of the urethane primer and subsequent superposition of the polyurethane layer thereupon may be more lengthened than in the case where the production process involves the use of an organic silicic compound, which will lead to the more improved productivity.

### [Second Embodiment]

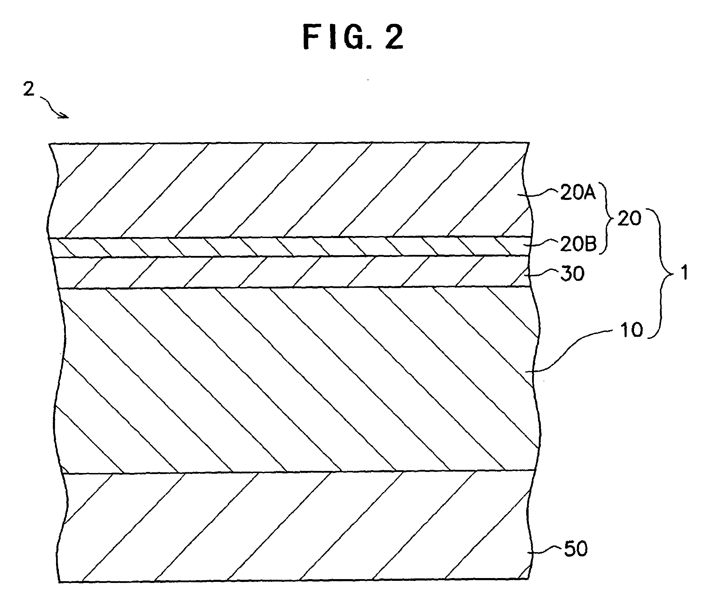

Fig. 2 shows a leather-like sheet representing a second embodiment of this invention.

The leather-like sheet 2 has the same structure with the resin laminate 1 representing the first embodiment, except that it comprises a polyester base material 50 applied on the TPO layer 10. Therefore, its further explanation will be omitted.

The leather-like sheet 2 is obtained by applying a base material 50 to a resin laminate 1 via calendering.

The second embodiment configured as above will ensure a following advantage, in addition to the aforementioned advantages (1) to (8).

(9) Because the leather-like sheet 2 comprises a base material 50 applied to a resin laminate 1, not only adhesion of the TPO layer 10 to the polyurethane layer 20 is enhanced, but the surface strength of the sheet 2 itself is also enhanced. Thus, this TPO-based leather-like sheet is suitably used as a material of furniture including sofas, or of the seats of an automobile.

### [Third Embodiment]

The structure of this embodiment is basically the same with that of the resin laminate 1 of the first embodiment, except that the primer layer 30 is obtained by mixing an organic pigment, TPO and toluene, and. applying the mixture to a TPO layer 10, and that the primer layer 30 receives corona discharge treatment so that its surface has a wetting index of 400 µN/cm or higher.

The process for producing the resin laminate 1 of this embodiment is the same with the one used for the production of the first embodiment except for the materials used for the formation of the primer layer 30, and thus its further explanation will be omitted.

This embodiment will ensure following advantages.
(2') Because the primer layer 30 contains an organic pigment at a concentration of 0.5 to 50 wt.%, adhesion of the primer layer 30 to the polyurethane layer 20 will be enhanced, which will strengthen the bonding of the layers constituting the resin laminate 1. Namely, the organic pigment will enhance the adhesion (affinity) of the primer layer to the polyurethane layer through the action of reactive groups such as amino and hydroxyl groups thereof.
(3') Because an organic pigment is contained in the primer layer 30, it is possible for the organic pigment to achieve its function at a lower concentration than would be possible for the amino acid added to the TPO layer.

In addition, this embodiment will ensure the advantage (1), and advantages (4) to (9) described above in relation with the first embodiment.

### [Fourth Embodiment]

The structure of this embodiment is basically the same with that of the leather-like sheet 2 of the second embodiment, except that the primer layer 30 contains an organic pigment as in the third embodiment.

The fourth embodiment will ensure following advantages.

Because it is based on the third embodiment, it will ensure the advantages similar to the advantages (1), (2'), (3') and (4) to (9) cited in relation with the third embodiment.

Because it is a leather-like sheet 2A having a base material, it will ensure the advantage (10) cited in relation with the second embodiment.

### [Variants of the First to Fourth Embodiments]

The present invention is not limited to the first to fourth embodiments, but all variations and modifications thereof will be included in this invention as long as they do not depart from the scope of this invention which is defined by the attached claims.

For example, according to the above embodiments, the resin laminate 1 has a four layer structure, that is, a lamination of a TPO layer 10, primer layer 30, urethane primer layer 20B and thermoplastic polyurethane layer 20A. However, its structure is not limited to this. The laminate may take any desired structure or may be made from any other resins, as long as it comprises a lamination of a TPO layer, a primer layer containing a specified adhesion improver, and a polyurethane layer.

The resin laminate can dispense with the reactive urethane primer layer, and the thermoplastic polyurethane layer may be directly applied to the primer layer.

With the above embodiments, the adhesion improver includes an amine compound. However, the adhesion improver is not limited to amine compounds, but may include any desired compound, as long as the compound has a functional group containing active hydrogen, or has an inorganic nature/organic nature ratio of 0.5 or higher.

The adhesion improver may comprise a combination of a compound having a functional group containing active hydrogen and another compound having an inorganic nature/organic nature ratio of 0.5 or higher.

The content of the adhesion improver in the primer layer 30 is determined to be 0.001 to 50 wt.%. However, the concentration may vary as appropriate, as long as the variation does not interfere with the adhesion improving function.

In the above embodiments, the solvent is toluene. However, the solvent is not limited to toluene, but may include any solvents such as other aromatic hydrocarbons, halogenated hydrocarbons, alicyclic hydrocarbons, ketones, esters, ethers, alcohols, etc.

In the above embodiments, the primer layer 30 receives corona discharge treatment so that its surface wetting index becomes 350 µN/cm or higher. However, the surface wetting is not limited to this range but may take any desired value, as long as it does not interfere with the bonding activity of the primer layer 30.

The primer layer may not receive corona discharge treatment on its surface.

According to the first embodiment, the thermoplastic polyurethane layer 20A is coated with gravure rolls. However, the coating method is not limited to this. Various apparatuses and methods may be employed, as long as they are suitable for the coating of a polyurethane layer. The coating may be achieved by directly superposing a polyurethane layer over a primer layer using a coater such as a comma coater, doctor knife coater, over-roll coater, etc., or by using an indirect offset method in which a polyurethane film (polyurethane layer) is formed on a sheet of separable paper, and the polyurethane film is then transferred onto the primer layer.

In the above embodiments, the primer layer 30 is formed with a bar coater. However, the coating method is not limited to this. The coating may be achieved with any other coater such as a doctor knife coater, gravure rolls, offset coater, etc. In the above embodiments, the reactive urethane primer layer is formed with gravure rolls. However, the method is not limited to this, and the coating may be achieved with any other coater such as a doctor knife coater, gravure rolls, an offset coater, etc.

According to the second embodiment, the base material 50 is made from polyester. However, the material is not limited to this, but may include textile woven mixedly from polyester and rayon threads, from rayon threads, from polypropylene threads, or mixedly from polyester and rayon threads, or non-woven textile of a polypropylene foamed body, or of a polyurethane foamed body.

The structure and shape of the resin laminate of this invention are not limited to those mentioned in relation with the above embodiments, but may take other desired structures and shapes, as long as the structure and shape satisfy the object of this invention.

### [Fifth Embodiment]

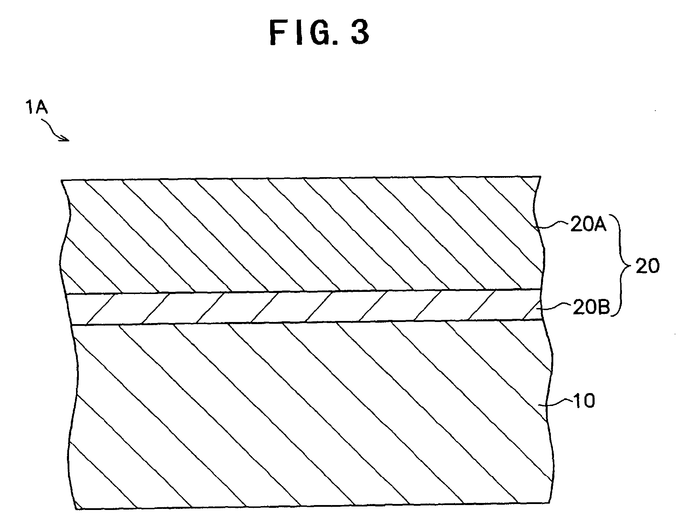

Fig. 3 shows a resin laminate 1A representing a fifth embodiment of this invention.

The resin laminate 1A comprises a TPO layer 10 containing an amine compound with an amino group or a functional group containing active hydrogen which serves as an adhesion improver, and a polyurethane layer 20 superposed on the TPO layer 10.

The amine compound is contained in the TPO layer at a concentration of 0.001 to 50 wt.%.

The polyurethane layer 20 comprises a sub-layer 20B of a reactive urethane primer (polyurethane primer layer), and a sub-layer 20A of thermoplastic polyurethane superposed on the polyurethane primer layer 20B.

The process for producing the resin laminate 1A consists of following steps.

Firstly, a TPO material containing an amine compound is processed via calendering or T-die extrusion to produce a TPO sheet 10; then a urethane primer layer 20B is formed on the TPO layer 10 with gravure rolls; the assembly is dried; and a thermoplastic polyurethane layer 20A is formed on the assembly to produce a resin laminate 1A.

The embodiment configured as above will ensure following advantages.
(10) Because the TPO layer 10 contains an amine compound at a concentration of 0.001 to 50 wt.%, adhesion of the TPO layer 30 to the urethane primer layer 20 will be enhanced, which will strengthen the bonding of the layers constituting the resin laminate 1A. Namely, an amino group of the amine compound will enhance the adhesion (affinity) of the TPO layer to the polyurethane layer 20.
(11) Because the polyurethane layer 20 is firmly bonded to the TPO layer 10, the resin laminate 1A will have an enhanced surface strength.
(12) Because the polyurethane layer 20 comprises a sub-layer of a reactive urethane primer, it is possible to firmly bond the urethane primer layer 20B not only to the TPO layer 10, but also to the thermoplastic polyurethane layer 20A. This further enhances the bonding of individual layers of the resin laminate 1A.
(13) Because the resin laminate body 1A is mainly composed of polyolefin compounds, it will not evolve toxic gases such as chlorine-containing gases even when incinerated, and thus is compatible with the environment.
(14) Because the production process does not involve the use of any organic silicic compound which is susceptible to moisture, the interval between application of the urethane primer and subsequent superposition of the polyurethane layer thereupon may be more lengthened than in the case where the production process involves the use of an organic silicic compound, which will lead to the more improved productivity.

### [Sixth Embodiment]

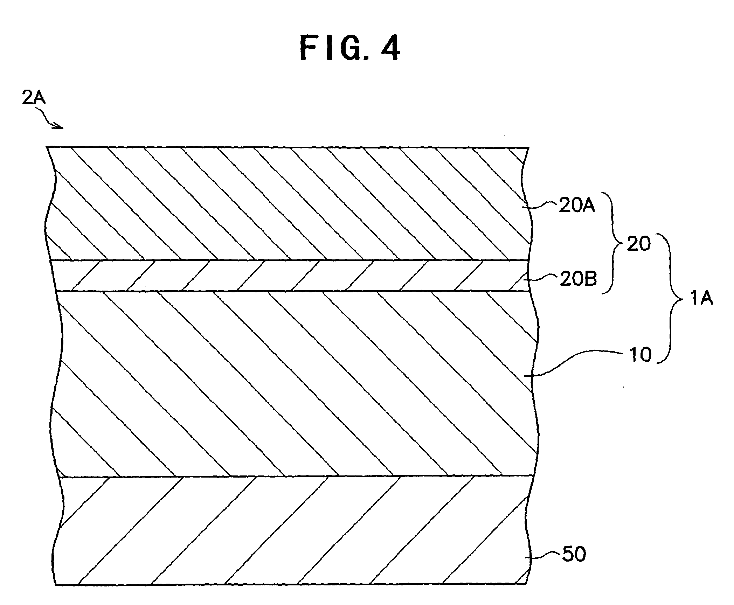

Fig. 4 shows a leather-like sheet representing a sixth embodiment of this invention.

The leather-like sheet 2A has the same structure with that of the resin laminate representing the fifth embodiment, except that it comprises a polyester base material 50 superposed on the TPO layer 10. Therefore, its further explanation will be omitted.

The leather-like sheet 2A configured as above is obtained by applying a base material 50 to a resin laminate 1A via calendering.

The sixth embodiment will ensure a following advantage, in addition to the advantages (10) to (14) mentioned above in relation to the fifth embodiment.

(15) Because the leather-like sheet 2A comprises a resin laminate 1A and a base material 50, adhesion of the TPO layer 10 to the polyurethane layer 20 is enhanced. Thus, the sheet gives a TPO-based leather-like sheet 2A with a high surface strength, and is suitably used as a material of furniture including sofas, or of the seats of an automobile.

### [Seventh Embodiment]

The structure of this embodiment is basically the same with that of the resin laminate 1A of the fifth embodiment shown in Fig. 3, except that the TPO layer 10 of this embodiment contains, instead of a compound with a functional group containing active hydrogen as in the fifth embodiment, a compound having an inorganic nature/organic nature ratio of 0.5 or higher at a concentration of 0.01 to 10 wt.% or higher which serves not only as an adhesion improver, but also as a heat stabilizer and/or light stabilizer.

The process for producing the resin laminate 1A of this embodiment is the same with the one used for the production of the fifth embodiment except that a different compound is used as an adhesion improver, and thus its further explanation will be omitted.

The embodiment configured as above will ensure following advantages.

(10') Because the TPO layer 10 contains a compound having an inorganic nature/organic nature ratio of 0.5 or higher at a concentration of 0.01 to 10 wt.% or higher which serves not only as an adhesion improver, but also as a heat stabilizer and/or light stabilizer, it is possible to enhance the adhesion of the TPO layer 10 to the polyurethane layer 20. Namely, the added compound will enhance the adhesion (affinity) of the TPO layer 10 to the polyurethane layer 20 through the action of polar groups such as amino and hydroxyl groups thereof.

In addition, this embodiment will ensure the advantages (11) to (14) mentioned above in relation to the fifth embodiment.

### [Eighth Embodiment]

The structure of this embodiment is basically the same with that of the leather-like sheet 2A of the sixth embodiment shown in Fig. 4, except that the TPO layer 10 of this embodiment contains, instead of a compound with a functional group containing active hydrogen as in the fifth embodiment, a compound having an inorganic nature/organic nature ratio of 0.5 or higher at a concentration of 0.01 to 10 wt.% or higher which serves not only as an adhesion improver, but also as a heat stabilizer and/or light stabilizer.

The embodiment configured as above will ensure following advantages.

Because this embodiment comprises a resin laminate 1A like that of the seventh embodiment, it will ensure the advantages (10') and (11) to (14) mentioned above in relation to the ninth embodiment.

Because this embodiment is a leather-like sheet 2A having a base material 50, it will ensure the advantage (15) mentioned above in relation to the sixth embodiment.

### [Ninth Embodiment]

The structure of this embodiment is basically the same with that of the leather-like sheet 1A of the fifth embodiment shown in Fig. 3, except that the TPO layer 10 of this embodiment contains, instead of the adhesion improver of the fifth embodiment, an organic pigment at a concentration of 5 to 50 wt.%.

The process for producing the resin laminate 1A of this embodiment is the same with the one used for the production of the fifth embodiment except that an organic pigment is used instead of an adhesion improver, and thus its further explanation will be omitted.

The embodiment configured as above will ensure following advantages.

(10") Because the TPO layer 10 contains an organic pigment at a concentration of 0.5 to 50 wt.%, adhesion of the TPO layer 10 to the polyurethane layer 20 will be enhanced. Namely, the organic pigment will enhance the adhesion (affinity) of the TPO layer 10 to the polyurethane layer 20 through the action of reactive groups such as amino and hydroxyl groups thereof.

In addition, this embodiment will ensure the advantages (11) to (14) mentioned above in relation to the fifth embodiment.

### [Tenth Embodiment]

The structure of this embodiment is basically the same with that of the leather-like sheet 2A of the sixth embodiment shown in Fig. 4, except that the TPO layer 10 of this embodiment contains, instead of the adhesion improver of the fifth embodiment, an organic pigment as in the ninth embodiment.

The embodiment configured as above will ensure following advantages.

Because this embodiment comprises a resin laminate 1A like that of the ninth embodiment, it will ensure the advantages (10') and (11) to (14) mentioned above in relation to the ninth embodiment.

Because this embodiment is a leather-like sheet 2A having a base material 50, it will ensure the advantage (15) mentioned above in relation to the sixth embodiment.

### [Variants of Fifth to Tenth Embodiments]

The present invention is not limited to the fifth to tenth embodiments, but all variations and modifications thereof will be included in this invention as long as they do not depart from the scope of this invention which is defined by the attached claims.

For example, according to the above embodiments, the resin laminate 1A has a three layer structure. However, its structure is not limited to this. The laminate may take any desired structure, as long as it comprises a TPO layer involving an adhesion improver with a functional group containing active hydrogen, and a polyurethane layer superposed on the TPO layer. The resin laminate can dispense with the urethane primer layer, and the thermoplastic polyurethane layer may be directly applied to the TPO layer. The laminate in question may comprise other resin layers.

With the fifth and sixth embodiments, the adhesion improver includes an amine compound. However, the adhesion improver is not limited to amine compounds, but may include any desired compound, as long as the compound has a functional group containing active hydrogen.

The content of the adhesion improver in the TPO layer 20 is determined to be 0.001 to 50 wt.%. However, the concentration may vary as appropriate, as long as the variation does not interfere with the adhesion improving function.

With regard to the fifth and sixth embodiments, the TPO layer may receive corona discharge treatment on its surface. The treated surface of the TPO layer is not limited to any specific value in terms of surface wetting index, but if the surface wetting index (as defined by JIS K-6768 and determined by the method described there) becomes 350 µN/cm or higher, adhesion of the TPO layer to an overlying layer will be enhanced.

With regard to the seventh and eighth embodiments, the content of the heat stabilizer and/or light stabilizer is determined to be 0.01 to 10 wt.%. However, the content in question is not limited to this range, but may be varied as appropriate as long as the variation does not interfere with the adhesive activity of the TPO layer.

With the above embodiments, the adhesion improver includes heat stabilizers and/or light stabilizers. However, the adhesion improver is not limited to them, but may include various compounds which have an inorganic nature/organic nature ratio of 0.5 or higher, such as organic compounds including aliphatic or aromatic hydrocarbons.

With regard to the seventh and eighth embodiments, the TPO layer 10 receives corona discharge treatment on its surface. The treated surface of the TPO layer 10 is not limited to any specific value in terms of surface wetting index (as defined in JIS K-6768 and is obtained by the method described there), but if the surface wetting index becomes 350 µN or higher, more preferably 400 µN/cm or higher, adhesion of the TPO layer 10 to an overlying layer will be enhanced.

According to the ninth and tenth embodiments, the content of the organic pigment in the TPO layer 20 is determined to be 0.001 to 50 wt.%. However, the concentration is not limited to this range but may vary as appropriate, as long as the variation does not interfere with the adhesion improving function of the pigment.

According to the ninth and tenth embodiments, the thermoplastic polyurethane layer 20A is coated with gravure rolls. However, the coating method is not limited to this. Various apparatuses and methods may be employed, as long as they are suitable for the coating of a polyurethane layer. The coating may be achieved by directly superposing a polyurethane layer over a primer layer using a coater such as a doctor knife coater, over-roll coater, etc., or by using an indirect offset method in which a polyurethane film (polyurethane layer) is formed on a sheet of separable paper, and the polyurethane film is then transferred onto the primer layer.

The apparatus for forming a urethane primer layer 20B is not limited to gravure rolls, but may include other coaters such as an offset coater.

According to the sixth, eighth and tenth embodiments, the base material 50 is made from polyester. However, the material is not limited to this, but may include textile woven mixedly from polyester and rayon threads, from rayon threads, from polypropylene threads, or mixedly from polyester and rayon threads, or non-woven textile of a polypropylene foamed body, or of a polyurethane foamed body.

The structure and shape of the resin laminate of this invention are not limited to those mentioned in relation to the above embodiments, but may take any other desired structure and shape, as long as the structure and shape satisfy the object of this invention.

### (Examples Based on the First Embodiment)

Examples based on the first embodiment will be described below.

### [Example 1]

Process oil (PW90, Idemitsu Kosan) 100 parts by weight, and thermoplastic polyolefin elastomer (E2640, Idemitsu Petrochemical) 100 parts by weight were thoroughly mixed and extended with a calendering machine comprising two rolls with a diameter of three inches kept at 160°C to produce a TPO sheet (TPO layer 10) having a thickness of 0.5 mm.

The same TPO (E2640) 5 parts by weight, polyamide amine (Sunmide 305, Sanwa Chemical) 0.5 part by weight to serve as an adhesion improver, and xylene 100 parts by weight were mixed so thoroughly that the adhesion improver was well dispersed in the mixture. The mixture was applied on the above TPO sheet with a bar coater, and the assembly was dried at 110°C to produce a laminate comprising a primer layer 30 with a thickness of about 5 µm superposed on the TPO layer.

Next, the surface of the primer layer 30 was subjected to corona discharge treatment (electric power at 0.3 kW, table speed at 6.2 m/min, the layer passed twice between the electrodes). After the treatment, the surface of the primer layer 30 had a wetting index of 390 µN/cm (in SI system of units and corresponds to 55 dyn/cm) or higher.

The wetting index is as defined in JIS K-6768 and was obtained by the method described there.

Then, polycarbonate urethane (Duracarb 140 and hexamethylenediisocyanate had been allowed to react with each other to produce a compound with OH groups at its terminals) dissolved in a mixed solvent of DMF/MEK, and hexamethylenediisocyanate dissolved in MEK were mixed to produce a reactive urethane primer solution. The solution was coated with gravure rolls on the primer layer 30 of the above laminate, and the assembly was dried at 100°C for 30 sec, to produce a urethane primer layer 20B with a thickness of about 5 µm on the laminate.

Polyurethane elastomer ( Resamine ME44, Dainichiseika) or thermoplastic polyurethane 100 parts by weight, DMF 30 parts by weight and MEK 30 parts by weight were mixed to produce a solution. The solution was applied with gravure rolls on the urethane primer layer 20B of the above laminate, and the assembly was dried at 100°C for 30 sec, to form a thermoplastic polyurethane layer 20A with a thickness of 15 µm on the laminate. Thus, a resin laminate 1 was obtained.

### [Example 2]

The same procedures as in Example 1 were employed except that polyoxypropylenediamine (Jeffamine D-2000, Sun Technochemicals) 0.3 part by weight was used as an adhesion improver, to produce a resin laminate 1.

### [Example 3]

The same procedures as in Example 1 were employed except that diaminodicyclohexylmethane (Wondamine, New Japan Chemical) 1.0 part by weight was used as an adhesion improver, to produce a resin laminate 1.

### [Example 4]

The same procedures as in Example 1 were employed except that 3,9-bis(3-aminopropyl)2,4,8,10-tetraoxaspiro(5,5)undecane ( Epomate 8.002, Japan Epoxy Resins) 1.0 part by weight was used as an adhesion improver, to produce a resin laminate 1.

### [Example 5]

The same procedures as in Example 1 were employed except that alicyclic polyamine ( G- 328, Mitsubishi Gas Chemical) 0.5 part by weight was used as an adhesion improver, to produce a resin laminate 1.

### [Example 6]

The same procedures as in Example 1 were employed except that a hindered amine light stabilizer (Tinuvin 622LD, Ciba Specialty Chemicals, inorganic nature/organic nature ratio of 0.69) 10 parts by weight was used as an adhesion improver, to produce a resin laminate 1.

### [Comparative Example]

The same procedures as in Example 1 were employed except that no adhesion improver was added, to produce a resin laminate.

For all the Examples and Comparative Example, adhesion of the urethane layer to the TPO layer of the resin laminate was determined, and the results are summarized in Table 1.

Adhesion of the polyurethane layer to the TPO layer of the resin laminate was determined by peeling the polyurethane layer off the TOP layer at a speed of 200 mm/min at room temperature.

**Table 1**

| | Peel-off test (N/cm) |
|---|---|
| Example 1 | 842 |
| Example 2 | Breakage of test laminate |
| Example 3 | 746 |
| Example 4 | 637 |
| Example 5 | 917 |
| Example 6 | 621 |
| Comparative Example 1 | 140 |

As is obvious from Table 1, the resin laminates of Examples 1 to 6 are obtained by superposing a TPO layer, a primer layer containing an adhesion improver and a polyurethane layer to each other, and thus adhesion of the layers to each other is enhanced.

In contrast, with the resin laminate of Comparative Example, its primer layer contains no adhesion improver, and thus adhesion between individual layers remains low.

### (Examples Based on the Third Embodiment)

Examples based on the third embodiment will be described below.

### [Example 7]

Process oil (PW90, Idemitsu Kosan) 100 parts by weight, and thermoplastic polyolefin elastomer (E2640, Idemitsu Petrochemical) 100 parts by weight were thoroughly mixed and extended with a calendering machine comprising two rolls with a diameter of three inches kept at 160°C to produce a TPO sheet (TPO layer 10) having a thickness of 1.0 mm.

The same TPO (E2640) 5 parts by weight, a condensed azo pigment (cromophtal yellow 3G, Ciba Specialty Chemicals) 2.5 parts by weight to serve as an organic pigment, and xylene 100 parts by weight were mixed so thoroughly that the pigment was well dispersed in the mixture. The mixture was applied on the above TPO sheet with a bar coater, and the assembly was dried at 110°C to produce a laminate comprising a primer layer 30 with a thickness of about 5 µm superposed on the TPO layer. Next, the surface of the primer layer 30 was subjected to corona discharge treatment so that the surface had a wetting index of 510 µN/cm (in SI system of units and is equivalent to 51 dyn/cm).

The wetting index is as defined in JIS K-6768 and was obtained by the method described there.

Then, polycarbonate urethane (Duracarb 140 and hexamethylenediisocyanate had been allowed to react with each other to produce a compound with OH groups at its terminals) dissolved in a mixed solvent of DMF/MEK, and hexamethylenediisocyanate dissolved in MEK were mixed to produce a reactive urethane primer solution. The solution was coated with gravure rolls on the primer layer 30 of the above laminate, and the assembly was dried at 100°C for 30 sec, to produce a urethane primer layer 20B with a thickness of about 5 µm on the laminate.

Polyurethane elastomer ( Resamine ME44, Dainichiseika) or thermoplastic polyurethane 100 parts by weight, DMF 30 parts by weight and MEK 30 parts by weight were mixed to produce a solution. The solution was applied with gravure rolls on the urethane primer layer 20B of the above laminate, and the assembly was dried at 100°C for 30 sec, to form a thermoplastic polyurethane layer 20A with a thickness of 15 µm on the assembly. Thus, a resin laminate 1 was obtained.

### [Example 8]

TPO (E2640) 5 parts by weight, diketopyrrolopyrrole (cromophtal red BP, Ciba Specialty Chemicals) 2.5 parts by weight to serve as an organic pigment, and xylene 100 parts by weight were mixed to give a primer solution, and the solution was applied with a bar coater on a TPO sheet (TPO layer 10) prepared as in Example 7, and the assembly was dried at 110°C to form a primer layer 30 with a thickness of about 5 µm on the assembly. Next, the surface of the primer layer 30 was subjected to corona discharge treatment so that the surface had a wetting index of 490 µN/cm (in SI system of units and is equivalent to 49 dyn/cm).

Then, a reactive urethane primer solution prepared as in Example 7 was applied with gravure rolls on the primer layer 30 of the above laminate, and the assembly was dried at 100°C for 30 sec to form a urethane primer layer 20B with a thickness of about 5 µm on the assembly.

Polyurethane elastomer ( Resamine ME44, Dainichiseika) 100 parts by weight, DMF 30 parts by weight and MEK 30 parts by weight were mixed to produce a solution. The solution was applied with gravure rolls on the primer layer 30 of the above laminate, and the assembly was dried at 100°C for 30 sec, to form a thermoplastic polyurethane layer 20A with a thickness of 15 µm on the assembly. Thus, a resin laminate 1 was obtained.

### [Comparative Example 2]

The same procedures as in Example 7 were employed except that no organic pigment was added, to produce a resin laminate.

The resin laminates of all the Examples and Comparative Example were subjected to a peel-off test and determined of their surface strength (wear resistance), and the results are summarized in Table 2.

The peel-off test consisted of peeling the polyurethane layer off the TOP layer at a speed of 200 mm/min at room temperature.

The surface strength measurement was performed with a friction tester model II as specified in JIS L-0823 (friction tester for stain fastness): a grazer was wrapped with cotton textile No. 6 as specified in JIS L-3102, and the grazer with the cotton textile was applied with a force of 9.8 N (in SI system of units and is equivalent to 1 kgf) 10,000 times repetitively onto the surface of the test laminate.

**Table 2**

| | Peel-off test (N/cm) | Anti-wear test (grade) |
|---|---|---|
| Example 7, | Breakage of test laminate | 5 |
| Example 8 | Breakage of test laminate | 5 |
| Comparative Example 2 | 0.69 | 1 |

The test laminates were ranked according to the following scale.

| | |
|---|---|
| Grade 5 | No change was detected. |
| Grade 4 | Slight change present. |
| Grade 3 | Clear change present. |
| Grade 2 | Considerable change present. |
| Grade 1 | Marked change present. |

As is obvious from Table 2, because the resin laminates of Examples 7 and 8 comprise a primer layer containing an organic pigment, not only adhesion of the polyurethane layer to the TPO layer is enhanced so much that separation of the former from the latter results in the breakage of the laminate, but the laminate itself has such a high surface strength that it shows no notable change in the wear resistance test (grade 5).

In contrast, with the resin laminate of Comparative Example 2, its primer layer contains no organic pigment, and thus adhesion between individual layers remains low and the laminate itself has a markedly low surface strength (grade 1).

### (Examples Based on the Fifth Embodiment)

Examples based on the fifth embodiment will be described below.

### [Example 9]

Process oil (PW90, Idemitsu Kosan) 10 parts by weight, thermoplastic polyolefin elastomer (E2640, Idemitsu Petrochemical) 100 parts by weight, and polyamide amine (Sunmide, Sanwa Chemical) to serve as an adhesion improver 0.5 part by weight were thoroughly mixed and extended with a calendering machine comprising two rolls with a diameter of three inches kept at 160°C to produce a TPO sheet (TPO layer 10) having a thickness of 1.0 mm.

Then, the surface of the TPO layer 10 was subjected to corona discharge treatment (electric power at 0.3 kW, table speed at 6.2 m/min, the layer passed twice between the electrodes). After the treatment, the surface of the TPO layer 10 had a wetting index of 390 µN/cm (in SI system of units and is equivalent to 55 dyn/cm) or higher.

The wetting index is as defined in JIS K-6768 and was obtained by the method described there.

Then, polycarbonate urethane (Duracarb 140 and hexamethylenediisocyanate had been allowed to react with each other to produce a compound with OH groups at its terminals) dissolved in a mixed solvent of DMF/MEK, and hexamethylenediisocyanate dissolved in MEK were mixed to produce a reactive urethane primer solution. The solution was coated with gravure rolls on the TPO sheet, and the assembly was dried at 100°C for 30 sec, to produce a urethane primer layer 20B with a thickness of about 5 µm on the laminate.

Polyurethane elastomer ( Resamine ME44, Dainichiseika) or thermoplastic polyurethane 100 parts by weight, DMF 30 parts by weight and MEK 30 parts by weight were mixed to produce a solution. The solution was applied with gravure rolls on the urethane primer layer 20B of the above laminate, and the assembly was dried at 100°C for 30 sec, to form a thermoplastic polyurethane layer 20A with a thickness of 15 µm on the assembly. Thus, a resin laminate 1A was obtained.

### [Example 10]

The same procedures as in Example 9 were employed except that polyoxypropylenediamine (Jeffamine D-2000, Sun Technochemicals) 0.3 part by weight was used as an adhesion improver, to produce a resin laminate 1A.

### [Example 11]

The same procedures as in Example 9 were employed except that diaminodicyclohexylmethane (Wondamine, New Japan Chemical) 1.0 part by weight was used as an adhesion improver, to produce a resin laminate 1A.

### [Example 12]

The same procedures as in Example 9 were employed except that 3,9-bis(3-aminopropyl)2,4,8,10-tetraoxaspiro(5,5)undecane ( Epomate 8.002, Japan Epoxy Resins) 1.0 part by weight was used as an adhesion improver, to produce a resin laminate 1A.

### [Example 13]

The same procedures as in Example 9 were employed except that alicyclic polyamine (G- 328, Mitsubishi Gas Chemical) 0.5 part by weight was used as an adhesion improver, to produce a resin laminate 1A.

### [Comparative Example 3]

The same procedures as in Example 9 were employed except that no adhesion improver was added, to produce a resin laminate.

For all the Examples and Comparative Example, adhesion of the TPO layer to the polyurethane layer of the resin laminate was determined, and the results are summarized in Table 3.

Adhesion of the TPO layer to the polyurethane layer of the resin laminate was determined by peeling the TPO layer off the polyurethane layer at a speed of 200 mm/min at room temperature.

**Table 3**

| | Peel-off test (N/cm) |
|---|---|
| Example 9 | 842 |
| Example 10 | Breakage of test laminate |
| Example 11 | 746 |
| Example 12 | 637 |
| Example 13 | 917 |
| Comparative Example 3 | 140 |

As is obvious from Table 3, the resin laminates of Examples 9 to 13 are obtained by superposing a TPO layer containing an amine compound, and a polyurethane layer to each other, and thus adhesion of the layers is enhanced.

In contrast, with the resin laminate of Comparative Example 3, its primer layer contains no adhesion improver, and thus adhesion between individual layers remains low.

### (Examples Based on the Seventh Embodiment)

Examples based on the seventh embodiment will be described below.

### [Example 14]

Thermoplastic polyolefin elastomer (E2640, Idemitsu Petrochemical) 100 parts by weight, process oil (PW90, Idemitsu Kosan) 10 parts by weight, and a hindered amine light stabilizer (Tinuvin 622LD, Ciba Specialty Chemicals, inorganic nature/organic nature ratio of 0.69) 0.5 part by weight were thoroughly mixed and extended with a calendering machine comprising two rolls with a diameter of three inches kept at 160°C to produce a TPO sheet (TPO layer 10) having a thickness of 0.5 mm.

Then, the surface of the TPO sheet was subjected to corona discharge treatment (electric power at 0.3 kW, sheet speed at 3.5 m/min, the sheet passed one and half time between the electrodes)(this will be called corona treatment condition A). After the treatment, the surface of the TPO sheet had a wetting index of 480 µN/cm (in SI system of units and is equivalent to 48 dyn/cm) or higher.

The wetting index is as defined in JIS K-6768 and was obtained by the method described there.

Then, polycarbonate urethane (Duracarb 140 and hexamethylenediisocyanate had been allowed to react with each other to produce a compound with OH groups at its terminals) dissolved in a mixed solvent of DMF/MEK, and hexamethylenediisocyanate dissolved in MEK were mixed to produce a reactive urethane primer solution. The solution was coated with gravure rolls on the TPO sheet, and the assembly was dried at 90°C for two minutes, to produce a urethane primer layer 20B with a thickness of about 5 µm on the laminate.

Polyurethane elastomer ( Resamine ME44, Dainichiseika) 100 parts by weight, DMF 30 parts by weight and MEK 30 parts by weight were mixed to produce a solution. The solution was applied with gravure rolls on the primer layer 30 of the above laminate, and the assembly was dried at 100°C for 30 sec, to form a polyurethane layer 20 with a thickness of 10 µm on the assembly. Thus, a resin laminate 1 was obtained.

### [Example 15]

The same procedures as in Example 14 were employed except that a hindered amine light stabilizer 0.1 part by weight was added, and that the TPO sheet was subjected to corona discharge treatment (electric power at 0.3 kW, sheet speed at 6.2 m/min, the sheet passed twice between the electrodes)(this will be called corona treatment condition B), to produce a resin laminate 1.

The surface of the TPO layer had a wetting index of 390 µN/cm (in SI system of units and equivalent to 39 dyn/cm).

### [Example 16]

The same procedures as in Example 15 were employed except that a benzotriazol ultraviolet ray absorber (Tinuvin 326, Ciba Specialty Chemicals, inorganic nature/organic nature ratio of 0.64) 1.0 part by weight was used as an adhesion improver, to produce a resin laminate 1.

The surface of the TPO layer had a wetting index of 380 µN/cm (in SI system of units and equivalent to 39 dyn/cm).

### [Example 17]

The same procedures as in Example 14 were employed except that a hindered phenol antioxidant (Irganox 1098, Ciba Specialty Chemicals, inorganic nature/organic nature ratio of 0.79) 0.5 part by weight was used as an adhesion improver, to produce a resin laminate 1.

The surface of the TPO layer had a wetting index of 490 µN/cm (in SI system of units and equivalent to 49 dyn/cm).

### [Example 18]

The same procedures as in Example 15 were employed except that a hindered amine light stabilizer (Chimassorb 119FL, Ciba Specialty Chemicals, inorganic nature/organic nature ratio of 0.58) 0.1 part by weight was used as an adhesion improver, to produce a resin laminate 1.

The surface of the TPO layer had a wetting index of 380 µN/cm (in SI system of units and equivalent to 38 dyn/cm).

### [Comparative Example 4]

The same procedures as in Example 14 were employed except that no adhesion improver was added, to produce a resin laminate. The surface of the TPO layer had a wetting index of 490 µN/cm (in SI system of units and equivalent to 49 dyn/cm).

### [Comparative Example 5]

The same procedures as in Example 15 were employed except that no adhesion improver was added, to produce a resin laminate. The surface of the TPO layer had a wetting index of 390 µN/cm (in SI system of units and equivalent to 39 dyn/cm).

### [Comparative Example 6]

The same procedures as in Example 14 were employed except that a hindered phenol antioxidant (Irganox 1010, Ciba Specialty Chemicals, inorganic nature/organic nature ratio of 0.48) 1 part by weight was used as an adhesion improver, to produce a resin laminate 1.

The surface of the TPO layer had a wetting index of 480 µN/cm (in SI system of units and equivalent to 48 dyn/cm).

### [Comparative Example 7]

The same procedures as in Example 14 were employed except that a benzotriazol ultraviolet ray absorber (Tinuvin 234, Ciba Specialty Chemicals, inorganic nature/organic nature ratio of 0.40) 0.5 part by weight was used as an adhesion improver, to produce a resin laminate.

The surface of the TPO layer had a wetting index of 470 µN/cm (in SI system of units and equivalent to 47 dyn/cm).

### [Comparative Example 8]

The same procedures as in Example 14 were employed except that a hindered amine light stabilizer (Chimassorb 944LD, Ciba Specialty Chemicals, inorganic nature/organic nature ratio of 0.37) 0.5 part by weight was used as an adhesion improver, to produce a resin laminate.

The surface of the TPO layer had a wetting index of 470 µN/cm (in SI system of units and equivalent to 47 dyn/cm).

With regard to the aforementioned Examples and Comparative Examples, the condition of corona treatment, whether the added adhesion improver is organic or inorganic, and what the inorganic nature/organic nature ratio of the adhesion improver is are summarized in Table 4.

The organic nature or inorganic nature of a given compound is related with its proximity to organic compounds or to inorganic compounds. The organic nature of a given compound is mainly determined by the properties of basic hydrocarbons (the size of the molecule), while its inorganic nature by the properties of its substitutive groups and modified portions (polarity).

To determine the inorganic nature/organic nature ratio of a given compound, following criteria were introduced: to quantify the organic nature of a compound, 20 points were assigned to every carbon atom the compound contains (no point was given to hydrogen atom), and to quantify its inorganic nature, recourse was made to the table 4.23 in "Handbook of Dyes," edited by Japanese Society of Organic Synthesis Chemistry, p. 53 which lists the graded strength of inorganic groups.

**Table 4**

| | Condition of corona treatment | Adhesion improver | Organic nature | Inorganic nature | Inorganic nature/organic nature ratio |
|---|---|---|---|---|---|
| Example 14 | A | Tinuvin622LD | 3920 | 2700 | 0.69 |
| Example 15 | B | Tinuvin622LD | 3920 | 2700 | 0.69 |
| Example 16 | B | Tinuvin326 | 360 | 230 | 0.64 |
| Example 17 | A | Irganox1098 | 800 | 630 | 0.79 |
| Example 18 | B | Chimassorb11 9FL | 2640 | 1520 | 0.58 |
| Comparative Example 4 | A | -- | -- | -- | -- |
| Comparative Example 5 | B | -- | -- | -- | -- |
| Comparative Example 6 | A | Irganox1010 | 1460 | 700 | 0.48 |
| Comparative Example 7 | A | Tinuvin234 | 600 | 240 | 0.40 |
| Comparative Example 8 | A | Chimassorb94 4LD | 3120 | 1140 | 0.37 |

For the above-described Examples and Comparative Examples, adhesion of the urethane layer to the TPO layer was determined, and the results are summarized in Table 5.

Adhesion of the polyurethane layer to the TPO layer was determined by peeling the polyurethane layer off the TPO layer at normal temperature, and by measuring the force necessary for the peel.

**Table 5**

| | Peel-off test (N/cm) |
|---|---|
| Example 14 | 5.47 |
| Example 15 | 3.35 |
| Example 16 | 4.16 |
| Example 17 | 6.96 |
| Example 18 | 3.27 |
| Comparative Example 4 | 2.43 |
| Comparative Example 5 | 2.51 |
| Comparative Example 6 | 1.66 |
| Comparative Example 7 | 2.09 |
| Comparative Example 8 | 0.94 |

As is obvious from Table 5, because the resin laminates of Examples 14 to 18 are obtained by superposing a TPO layer containing an adhesion improver having an inorganic nature/organic nature ratio of 0.5 or higher, and a reactive urethane layer to each other, adhesion of the layers to each other is enhanced.

In contrast, with the resin laminate of Comparative Example 4, its TPO layer contains no adhesion improver, and thus adhesion between individual layers remains low.

### (Examples Based on the Ninth Embodiment)

Examples based on the ninth embodiment will be described below.

### [Example 19]

Thermoplastic polyolefin elastomer (E2640, Idemitsu Petrochemical) 100 parts by weight, process oil (PW90, Idemitsu Kosan) 10 parts by weight, and an anthraquinone organic pigment (cromophtal red A3B, Ciba Specialty Chemicals) 3 parts by weight were thoroughly mixed and extended with a calendering machine comprising two rolls with a diameter of three inches kept at 160°C to produce a TPO sheet (TPO layer 20) having a thickness of 0.5 mm.

Then, polycarbonate urethane (Duracarb 140 and hexamethylenediisocyanate had been allowed to react with each other to produce a compound with OH groups at its terminals) dissolved in a mixed solvent of DMF/MEK, and hexamethylenediisocyanate dissolved in MEK were mixed to produce a reactive urethane primer solution. The solution was coated with gravure rolls on the TPO sheet, and the assembly was dried at 130°C for 20 sec, to produce a primer layer 30 with a thickness of about 5 µm on the laminate.

Polyurethane elastomer (Resamine ME44, Dainichiseika) 100 parts by weight, DMF 30 parts by weight and MEK 30 parts by weight were mixed to produce a solution. The solution was applied with gravure rolls on the primer layer 30 of the above laminate, and the assembly was dried at 100°C for 30 sec, to form a polyurethane layer 40 with a thickness of 10 µm on the assembly. Thus, a resin laminate 1A was obtained.

### [Example 20]

A condensed azo pigment (cromophtal yellow 3G, Ciba Specialty Chemicals) 5 parts by weight, process oil (PW90, Idemitsu Kosan) 10 parts by weight, and thermoplastic polyolefin elastomer (E2640, Idemitsu Petrochemical) 100 parts by weight were thoroughly mixed and extended with a calendering machine comprising two rolls with a diameter of three inches kept at 160°C to produce a TPO sheet (TPO layer 20) having a thickness of 1.0 mm.

The surface of the TPO sheet was subjected to corona discharge treatment so that the surface had a wetting index of 520 µN/cm (in SI system of units and is equivalent to 52 dyn/cm).

The wetting index is as defined in JIS K-6768 and was obtained by the method described there.

Then, the reactive urethane primer solution prepared as in Example 19 was coated with gravure rolls on the TPO sheet, and the assembly was dried at 100°C, to produce a primer layer 30 with a thickness of 5 µm on the TPO layer.

Polyurethane elastomer ( Resamine ME44, Dainichiseika) 100 parts by weight, DMF 30 parts by weight and MEK 30 parts by weight were mixed to produce a solution. The solution was applied with gravure rolls on the primer layer 30 of the above laminate, and the assembly was dried at 100°C for 30 sec, to form a polyurethane layer 40 with a thickness of 15 µm on the assembly. Thus, a resin laminate 1A was obtained.

### [Example 21]

The same procedures as in Example 19 were employed except that diketopyrrolopyrrole (cromophtal red BP, Ciba Specialty Chemicals) was used as an organic pigment, to produce a resin laminate 1A.

### [Example 22]

The same procedures as in Example 19 were employed except that a condensed azo pigment (cromophtal yellow 3G, Ciba Specialty Chemicals) to serve as an organic pigment was added 1 part by weight, to produce a resin laminate 1A.

### [Example 23]

The same procedures as in Example 19 were employed except that isoindolinone (Irgazin yellow 3RLTN, Ciba Specialty Chemicals) to serve as an organic pigment was added 5 parts by weight, to produce a resin laminate 1A.

### [Example 24]

The same procedures as in Example 19 were employed except that dioxazine (cromophtal violet B, Ciba Specialty Chemicals) to serve as an organic pigment was added 10 parts by weight, to produce a resin laminate 1A.

### [Comparative Example 9]

The same procedures as in Example 20 were employed except that no condensed azo pigment was added, to produce a resin laminate.

### [Comparative Example 10]

The same procedures as in Example 19 were employed except that the primer layer with a thickness of 5 µm was prepared from a chloroprene primer (Penguin cement 370, Sunstar Engineering), and the polyurethane layer had a thickness of 6 µm, to produce a resin laminate.

The resin laminates of all the Examples and Comparative Examples were subjected to a peel-off test and determined of their surface strength (wear resistance), and the results are summarized in Table 6.

The peel-off test consisted of peeling the polyurethane layer off the TOP layer at a speed of 200 mm/min at room temperature.

The surface strength measurement was performed with a friction tester model II as specified in JIS L-0823 (friction tester for stain fastness): a grazer was wrapped with cotton textile No. 6 as specified in JIS L-3102, and the grazer with the cotton textile was applied with a force of 9.8 N (in SI system of units corresponding to 1 kgf) 10,000 times repetitively onto the surface of the test laminate.

**Table 6**

| | Peel-off test (N/cm) | Anti-wear test (grade) |
|---|---|---|
| Example 19 | Breakage of test laminate | 4 |
| Example 20 | Breakage of test laminate | 5 |
| Example 21 | Breakage of test laminate | 4 |
| Example 22 | Breakage of test laminate | 5 |
| Example 23 | Breakage of test laminate | 4 |
| Example 24 | Breakage of test laminate | 4 |
| Comparative Example 9 | 0.69 | 1 |
| Comparative Example 10 | 1.30 | 2 |

The test laminates were ranked according to the following scale.

| | |
|---|---|
| Grade 5 | No change was detected. |
| Grade 4 | Slight change present. |
| Grade 3 | Clear change present. |
| Grade 2 | Considerable change present. |
| Grade 1 | Marked change present. |

As is obvious from Table 6, because the resin laminates of Examples 19 to 24 comprise a TPO layer containing an organic pigment, a reactive urethane layer and a polyurethane layer superposed on each other, not only adhesion between the layers and the surface strength of individual layers are enhanced, but the laminate itself has such a high surface strength that it shows no notable change in the wear resistance test (grades 5 to 4).

In contrast, with the resin laminate of Comparative Example 9, its TPO layer contains no organic pigment, and thus adhesion between individual layers remains low (grade 1).

With the resin laminate of Comparative Example 10, the TPO layer was directly superposed on the primer layer, and the polyurethane layer had a thickness of as low as 6 µm, and thus the resin laminate had such a low surface strength that it underwent a marked wear in the wear resistance test (grade 2).

### Industrial Availability

This invention provides a resin laminate and a method for the production thereof, the resin laminate being applicable as a material of leather-like sheets and automotive interiors.

## Claims

1. A resin laminate comprising:
a thermoplastic polyolefin elastomer (TPO) layer;
a primer layer superposed on the TPO layer;
a polyurethane layer superposed on the primer layer, wherein:
the primer layer is made from a thermoplastic polyolefin elastomer containing an adhesion improver; and
the adhesion improver comprises a compound having a functional group containing active hydrogen and/or a compound having an inorganic nature/organic nature ratio of 0.5 or higher.

2. A resin laminate as described in Claim 1 wherein the functional group containing active hydrogen comprises an amino group.

3. A resin laminate as described in Claim 1 wherein the compound having an inorganic nature/organic nature ratio of 0.5 or higher comprises a heat stabilizer and/or a light stabilizer.

4. A resin laminate as described in any one of Claims 1 to 3 wherein the content of the adhesion improver in the primer layer is 0.001 to 50 wt.%.

5. A resin laminate comprising a TPO layer, and a polyurethane layer superposed on the TPO layer wherein:
an adhesion improver is added to the TPO layer; and
the adhesion improver comprises a compound having a functional group containing active hydrogen and/or a compound having an inorganic nature/organic nature ratio of 0.5 or higher.

6. A resin laminate as described in Claim 5 wherein the functional group containing active hydrogen comprises an amino group.

7. A resin laminate as described in Claim 5 or 6 wherein:
the adhesion improver comprises a compound having a functional group containing active hydrogen; and
the content of the adhesion improver in the TPO layer is 0.001 to 50 wt.%.

8. A resin laminate as described in Claim 5 wherein the adhesion improver comprises a heat stabilizer and/or a light stabilizer.

9. A resin laminate as described in Claim 5 or 8 wherein:
the adhesion improver comprises a compound having an inorganic nature/organic nature ratio of 0.5 or higher; and
the content of the adhesion improver in the TPO layer is 0.01 wt.% or higher.

10. A resin laminate comprising:
a TPO layer;
a primer layer superposed on the TPO layer; and
a polyurethane layer superposed on the primer layer, wherein:
the primer layer is made from an organic pigment and a thermoplastic polyolefin elastomer.

11. A resin laminate as described in Claim 10 wherein the content of the organic pigment in the primer layer is 0.5 to 50 wt.%.

12. A resin laminate comprising:
a TPO layer; and
a polyurethane layer superposed on the TPO layer, wherein:
the TPO layer contains an organic pigment; and
the TPO layer and the polyurethane layer are firmly bonded to each other.

13. A resin laminate as described in Claim 12 wherein the content of the organic pigment in the TPO layer is 0.5 to 50 wt.%.

14. A resin laminate as described in any one of Claims 1 to 13 wherein the polyurethane layer comprises a sublayer of a reactive urethane primer and a sublayer of thermoplastic polyurethane.

15. A leather-like sheet comprising a resin laminate as described in any one of Claims 1 to 14, and a base material.

16. An automotive interior material incorporating a leather-like sheet as described in Claim 15.

17. A method for producing a resin laminate having a TPO layer and a polyurethane layer comprising the steps of:
treating the TPO layer containing an organic pigment with a reactive urethane primer; and
superposing a polyurethane layer on the treated TPO layer.

18. A method as described in Claim 17 for producing a resin laminate wherein:
the content of the organic pigment in the TPO layer is 0.5 to 50 wt.%.

19. A method as described in Claim 17 or 18 for producing a resin laminate comprising the steps of:
subjecting the TPO layer to corona discharge treatment; and
treating the thus treated TPO layer with a reactive urethane primer.

20. A method as described in Claim 19 for producing a resin laminate wherein:
the surface of the TPO layer has a wetting index of 400 µN/cm or higher after corona discharge treatment.
